(19)

Europäisches
Patentamt
European
Patent Office
Office européen
des brevets

(11) **EP 1 892 458 A1**

(12) **EUROPEAN PATENT APPLICATION**

(43) Date of publication:
**27.02.2008 Bulletin 2008/09**

(51) Int Cl.:
*F17D 3/14* (2006.01)    *F17D 1/05* (2006.01)
*C10G 33/06* (2006.01)    *C09K 8/52* (2006.01)

(21) Application number: **06076610.2**

(22) Date of filing: **22.08.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(71) Applicant: **Nederlandse Organisatie voor
toegepast-
natuurwetenschappelijk onderzoek TNO
2628 VK The Hague (NL)**

(72) Inventors:
• **Verhelst, Frédérique José Paul Christian Marie G.
2151 HA Nieuw Vennep (NL)**

• **Twerda, Aris
2611 WP Delft (NL)**
• **Smeulers, Johannes Petrus Maria
3331 GP Zwijndrecht (NL)**
• **Peters, Marinus Carolus Adrianus Maria
4813 XE Breda (NL)**
• **Belfroid, Stefan Philip Christiaan
2624 CW Delft (NL)**
• **Schiferli, Wouter
1062 DM Amsterdam (NL)**

(74) Representative: **van Loon, C.J.J. et al
VEREENIGDE
Johan de Wittlaan 7
2517 JR Den Haag (NL)**

(54) **Controlled formation of hydrates**

(57)    The invention relates to a method for reducing or avoiding deposition of a hydrocarbon hydrate on a surface that is in contact with a hydrocarbon flow which contains water, the method comprising controlling the nucleation of dry hydrocarbon hydrate crystals in the flow.

The invention further relates to a method for transporting a hydrocarbon flow which contains a hydrocarbon hydrate and to a method for preparing a dry hydrocarbon hydrate.

EP 1 892 458 A1

## Description

The invention relates to a method for avoiding or reducing the deposition of wet hydrates from a hydrocarbon flow on a surface, such as the inner wall of a pipeline, or another surface with which the flow is contacted. The invention further relates to a method of preparing a dry hydrocarbon hydrate and to a method for transporting a hydrocarbon flow.

Hydrocarbon hydrate formation is considered a serious problem in the gas and oil industry. Hydrocarbon hydrates formed in a hydrocarbon flow tend to deposit on a surface with which the flow is contacted, unless special precautions are taken. Depositions of the hydrocarbon hydrate can cause increased friction or even clogging in pipelines and/or malfunctioning of valves, measuring instruments etc..

One way to avoid the formation of hydrates is the addition of anti-freeze additives to the hydrocarbon flow, such as ethylene glycol or methanol. The addition of such additives is disadvantageous in that it increases cost. Further, depending on the intended use of the hydrocarbon, the additives may need to be removed before further processing. Moreover, the addition of such additives may be detrimental to the environment.

It has also proposed to avoid formation of hydrates by keeping the hydrocarbon flows heated at a temperature at which the dynamic conditions (temperature, pressure) do not allow formation of hydrates. Such method is costly due to the required energy for heating the flow and adds to the complexity of the equipment wherein the flow is transported, as heaters are required to maintain a sufficiently high temperature. This is in particular a burden in case the hydrocarbon is transported over a long distance and/or under low temperature conditions, e.g. through a pipeline in a sea.

WO 00/25062 describes a method wherein a fluid hydrocarbon flow is treated in a reactor wherein it is mixed with particles of gas hydrates which are also introduced in the reactor. The effluent from the reactor comprising the hydrocarbon and gas hydrates are cooled in a heat exchanger. Thereafter, the flow are treated in a separator to remove the gas hydrates from the hydrocarbon flow. The gas hydrates are recycled to the reactor. In particular, recycling adds to the size (length) of the installation. Furthermore, the requirement of a heat exchanger and a separator makes the process complicated.

It is an object of the present invention to provide a novel method for transporting a hydrocarbon flow that can be used as an alternative to known methods.

In particular, it is an object to provide a novel method that allows transportation of a hydrocarbon flow whilst substantially avoiding an unacceptable deposition of hydrates on a surface with which the flow is contacted.

More in particular, it is an object to avoid such deposition without requiring substantial amounts of an additive for avoiding hydrate formation, without requiring to heat the flow throughout transportation and/or without requiring the removal of the hydrates formed in the flow before transportation or at an early stage of transportation.

It is a further object to provide a novel installation suitable for carrying out a method of the invention.

One or more objects which may be solved in accordance with the invention are apparent from the remainder of the description.

The inventors have come to the surprising insight that it is possible to reduce or even avoid deposition of hydrocarbon hydrate on a surface contacted with a hydrocarbon flow, by controlling the formation of hydrocarbon hydrates in a specific way. In particular they have realised that an unacceptable deposition is generally caused by wet hydrates, i.e. hydrocarbon hydrate crystals that comprise liquid water in addition to the bound water present in the hydrate.

The inventors further realised that by controlling (in particular stimulating) the formation of dry hydrocarbon crystals (i.e. crystals that are essentially free of water other than the water molecules bound in the hydrocarbon hydrate) the formation of the "wet" hydrates can be reduced or even avoided.

The inventors in particular realised that an unacceptable deposition of hydrocarbon hydrates is avoidable by controlling the nucleation process of hydrocarbon hydrates.

Accordingly, the present invention relates to a method for reducing or avoiding deposition of a hydrocarbon hydrate - in particular a wet hydrocarbon hydrate - on a surface that is in contact with a hydrocarbon flow which flow contains water, the method comprising the nucleation of dry hydrocarbon hydrate crystals in the flow.

Further, the invention relates to a method for transporting a hydrocarbon flow which flow contains water, comprising reducing or avoiding deposition of a hydrocarbon hydrate in the flow - in particular a wet hydrocarbon hydrate in the flow - on a surface that is in contact with the hydrocarbon flow, the method comprising controlling the nucleation of dry hydrocarbon hydrate crystals in the flow

Further, the invention relates to an installation suitable for use in a method according to any one of the preceding claims comprising

a supply for a hydrocarbon flow - such as an off-shore platform, a hydrocarbon well, a subsea platform, a pipeline - upstream of a hydrate unit, which hydrate unit comprises at least one device selected from Laval nozzles, shock wave generators and ultra-sound wave generators, which hydrate unit is upstream of a transportation pipe line or another transportation device.

The method of the invention may advantageously be carried out without recycling hydrocarbon hydrates (such as to a reactor wherein hydrates are formed).

The method of the invention may advantageously be carried out, also in the absence of anti-freeze additives or other additives to avoid formation of hydrates.

The method of the invention may advantageously be carried out, also without removing substantial amounts of hydrates or without removing any hydrates from the flow prior to further transportation.

The method of the invention may in particular be carried out, without adding a grafting additive, such as grafting crystals to facilitate growth of hydrocarbon hydrates, to the flow (by recirculation or otherwise).

It is further an advantage of the invention that the method of the invention may be carried out in relatively simple equipment, for instance an installation which is free of a separator for the hydrocarbon and hydrocarbon hydrate crystals and/or which is free of heaters for heating the hydrocarbon flow downstream of the hydrate unit and/or which is free of a recycling loop for recycling the hydrates.

The hydrocarbon flow may in particular comprise at least one component selected from alkanes, in particular methane, ethane, propane, butanes, pentanes, hexanes, heptanes, octanes; alkenes, in particular ethylene and propylene; alkynes, in particular acetylene. Preferred hydrocarbon flows include compositions comprising several hydrocarbons such as natural gasses.

The controlling of the nucleation in particular involves stimulation of the nucleation such that dry hydrates are preferentially formed. The controlling may be realised in several ways. In general, the controlling comprises choosing dynamic conditions in the hydrocarbon flow to conditions at which dry hydrate crystals are allowed to form. In particular the choosing may comprise changing temperature and/or pressure to a temperature and pressure under which the dry hydrate crystals are allowed to form preferentially over wet hydrocarbon hydrate crystals.

Suitable conditions - in particular pressure and temperature - depend on the composition of the hydrocarbon flows. For various hydrocarbons and hydrocarbons suitable temperatures and pressures - e.g. presented in the form of a phase-diagram or a table - from which suitable conditions can be determined, are known in the art. For instance suitable temperatures and pressures can be found in J. Carrol, 'Natural gas hydrates. A guide for engineers', (2003*)*, of which in particular the data regarding temperature and pressures for the compounds mentioned therein are incorporated herein by reference. Also, use may be made of a thermodynamic computer simulation program, such as PVTSIM or HYSYS, which are commonly known in the art.

Preferably, the rate at which the temperature and/or pressure are changed is controlled. Hereby the nucleation rate of water vapour (from vapour to hydrate) can be controlled. The rate is generally chosen sufficiently low to allow formation of nuclei and suffiently high to favour the formation of dry crystals. A suitable rate depends on the composition of the flow. The skilled person will be able to determine a suitable rate based on the contents of the present description and claims, common general knowledge and optionally some experimentation. As a rule of thumb: if at a certain range wet crystals are formed which are usually relatively large, the rate should be increased. If no crystals or too few crystals are formed to bind enough water in the form of hydrate crystals, the rate should be decreased.

With a low expansion rate, the nucleation rate of water condensation droplets is low because the maximum supersaturation remains low and therefore few yet large droplets are formed. Hydrates are formed on the surface of these droplets and will leave a wet core. With high expansion rates, the nucleation rate is high and a large number of small droplets is formed. These droplets typically should be smaller than 1 $\mu$m, preferably 0.5 $\mu$m or less. With the transition to hydrates essentially all the water is usually transformed to hydrates. It is advantageous that the particles are small such that they are carried with the flow and no deposition occurs, or at least deposition occurs to a lesser extent. These particles act as condensation nuclei in the downstream process.

Care must be taken to avoid significant hydrocarbon condensation such that mixed water and hydrocarbon droplets are formed. Preferably, primarily water droplets must be formed. This effect can be achieved by choosing the expansion rates and end conditions depending on the composition and operation conditions. In a preferred method of the invention, the dynamic conditions are changed by accelerating the hydrocarbon flow to supersonic velocity.

Supersonic velocity is defined herein as a flow speed higher than the speed of sound, under the actual conditions (such as temperature, pressure, composition of the flow).

Preferably, the flow is accelerated by using a Laval nozzle. Alternatively or in addition, a choke may be suitable.

Laval nozzles are generally known in the art, see e.g. A.H. Shapiro, 'The dynamics and thermodynamics of compressible fluid flow', (New York 1953), of which the contents regarding Laval nozzles are incorporated herein by reference.

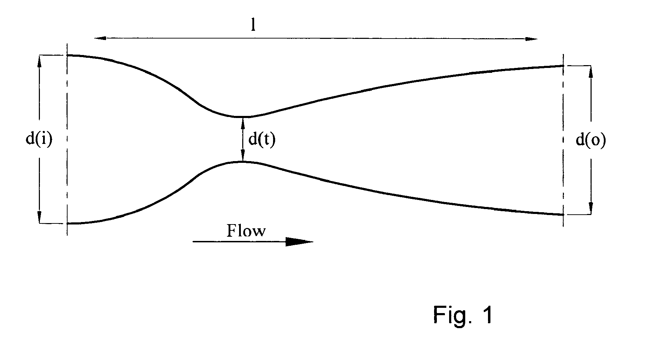

Laval nozzles comprise a first section which is convergent and thereafter second section, which is divergent. Figure 1 shows a schematic drawing of such as nozzle The hydrocarbon flow is led into the nozzle at subsonic velocity, the velocity will increase in the convergent section of the nozzle. At or near the nozzle "throat" , where the flow cross sectional area is at a minimum ($d_t$ in Figure 1), the gas velocity reaches sound velocity. As the nozzle cross sectional area increases in the divergent section the gas continues to expand and the gas flow may increase to supersonic velocities. The expansion generally is essentially adiabatic, reducing the temperature and pressure to a temperature wherein the formation of dry hydrates is allowed to take place. The temperature and pressure to which the flow is brought is determined based on: the inlet pressure and temperature of the flow into the nozzle, the diameter at the throat of the nozzle and the diameter at the widened part beyond the throat.

The ratio of the outlet diameter ($d_o$) to the minimum diameter ($d_t$) should be larger than 1, in particular at least 1.001. Usually a ratio of the outlet diameter ($d_o$) to the minimum diameter ($d_t$) of up to about 1.3 suffices, although a Laval nozzle having a higher ratio may be used to further increase the velocity, if desired. It is contemplated that at a higher ratio, special safety precautions may need to be taken, which makes the installation more complicated and/or makes it more expensive.

The rate at which the temperature and pressure are changed can be controlled by choosing the length of the converging and diverging section of the nozzle. The longer these sections are, the lower the expansion rate is.

For obtaining supersonic conditions the pressure at the outlet ($p_o$) of the nozzle should be sufficiently low, typically at least 1.7 times lower than the pressure at the inlet ($p_i$).

In particular, usually

$$p_o/p_i \; < \; (1+(\gamma-1)/2)^\wedge(\; \gamma/(1-\gamma))$$

wherin $\gamma$ is the isentropic coefficient.

Alternatively or in addition, dynamic conditions may be changed by using waves, such as shock waves or ultra-sound waves.

Ultrasound waves are vibrations of the same physical nature as sound but with frequencies above the range of human hearing, in particular such waves having a frequency of at least about 20kHz.

A shock wave is a sharp transition from supersonic to subsonic conditions.

The extend to which thermodynamic conditions - in particular pressure and/or temperature - are changed, can be controlled by selecting the frequency and/or amplitude of the wave. For a higher change in temperature and pressure, the amplitude generally should be increased, for a lower change it should be decreased.

The rate at which the thermodynamic conditions are changed can be controlled by selecting the frequency of the waves. For a higher rate, the frequency should be increased, for a lower rate it should be decreased. In particular if the hydrocarbon flow contains relatively high amounts of bulk liquid (water/oil condensate, e.g. as droplets and/or as a film), bulk liquid may first be removed from the flow, prior to controlling the nucleation of dry hydrate, if desired. Removal thereof is advantageous to prevent heterogeneous nucleation and/or favour homogenous nucleation. Heterogenic nucleation is nucleation and/or condensation on existing particles (droplets, dust particles, crystals). Homogenous nucleation involves de novo generation of droplets, which subsequently crystallise.

The invention further relates to a method for preparing a dry hydrocarbon hydrate comprising subjecting a hydrocarbon flow comprising water to supersonic conditions, ultrasound waves and/or shockwaves. Conditions are preferably is indicated above.

The invention will now be illustrated by the following example.

Example 1

In this example a possible system and process, making use of a Laval nozzle is described. We base our example on a composition of:

| | |
|---|---|
| $H_2O$ | 0.69 mol% |
| Methane | 59.31 mol% |
| Ethane | 30 mol% |
| Propane | 10 mol% |

Typical inlet conditions are:

| | | |
|---|---|---|
| 1. | Mass flow rate : | 10 kg/s |
| 2. | Inlet pressure : | 20 bar |
| 3. | Inlet temperature : | 50 °C |

An exemplary minimum tube diameter (dt, at the throat of the nozzle) is 56.7 mm. Then, with a nozzle outlet diameter of 58.6 mm an end Mach number of M=1.3 is reached. This results in an outlet pressure of p=9.2 bar and a temperature of -2.7 °C. This is well within the hydrate formation area. At this end pressure, the upper limit for the temperature at which hydrates are formed is approximately 4.8 °C. With a cooling rate of 50 000K/s a total length of the system of 240 mm suffices.

A person skilled in the art can determine a suitable length of the system based on the cooling rate by calculating the pressure and temperature profile. The typical nucleation rate is in the order of $J=10^{21}$ $m^{-3}s^{-1}$. This results in typical droplets with radii of 0.1-0.2$\mu$m.

**Claims**

1. Method for reducing or avoiding deposition of a hydrocarbon hydrate on a surface that is in contact with a hydrocarbon flow which contains water, the method comprising controlling the nucleation of dry hydrocarbon hydrate crystals in the flow.

2. Method according to claim 1, wherein the controlling comprises choosing dynamic conditions - in particular pressure and temperature - at which dry hydrocarbon hydrate crystals are allowed to form preferentially over wet hydrocarbon hydrate crystals.

3. Method according to claim 2, wherein the changing of the dynamic conditions comprises accelerating the flow to supersonic conditions.

4. Method according to any one of the preceding claims, the flow is accelerated by using a Laval nozzle.

5. Method according to claim 4, wherein the nucleation rate is controlled by controlling the temperature change rate in the Laval nozzle.

6. Method according to any one of the preceding claims, wherein the flow is exposed to waves, in particular shock waves and/or ultra-sound waves, thereby changing the dynamic conditions to allow dry hydrate formation.

7. Method according to any of the preceding claims, wherein the flow is treated in a gas-liquid separator to remove bulk liquid from the flow.

8. Method for transporting a hydrocarbon flow, comprising treating the flow by a method according to any one of the preceding claims.

9. Method according to claim 8, wherein at least part of the transportation takes place at a temperature and pressure, that are thermodynamically suitable to allow formation of a wet hydrate.

10. Method according to claim 8 or 9, wherein during the transportation a dry hydrocarbon hydrate is present in the hydrocarbon flow.

11. Method according to any one of the preceding claims, wherein the flow is substantially free of anti-freeze additives, in particular substantially free of ethylene glycol and methanol

12. Method according to any one of the preceding claims wherein the hydrocarbon flow is selected from flows comprising at least one component selected from alkanes, in particular from methane, ethane, propane, butanes, pentanes, hexanes, heptanes and octanes; alkenes, in particular from ethylene and propylene; alkynes, in particular acetylene; wherein the hydrocarabon flow preferably is a natural gas.

13. Installation for use in a method according to any one of the preceding claims comprising

- a supply for a hydrocarbon flow upstream of a hydrate unit, comprising at least one of a Laval nozzle, a shock wave generator and an ultra-sound wave generator, which unit is upstream of a transportation pipe line or another transportation device.

14. Installation according to claim 13, wherein a gas/liquid separator is present upstream of the hydration unit.

15. Method for preparing a dry hydrocarbon hydrate comprising subjecting a hydrocarbon flow comprising water to supersonic conditions, ultrasound waves and/or shockwaves.

Fig. 1

| | European Patent Office | EUROPEAN SEARCH REPORT | Application Number EP 06 07 6610 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | WO 00/25062 A (LEIV EIRIKSSON NYFOTEK AS [NO]; LUND ARE [NO]; LYSNE DAVID [NO]; LARSE) 4 May 2000 (2000-05-04)<br>* page 3, line 27 - page 4, line 1 *<br>* page 6, line 12 - line 13 * | 1,2,9, 10,12 | INV.<br>F17D3/14<br>F17D1/05<br>C10G33/06<br>C09K8/52 |
| Y | * page 1, line 24 - line 26 * | 3-7,11, 13-15 | |
| | ----- | | |
| Y | WO 00/40834 A (SHELL INT RESEARCH [NL]; TJEENK WILLINK CORNELIS ANTONI [NL]) 13 July 2000 (2000-07-13)<br>* page 1, line 14 - page 2, line 11 *<br>* page 12, line 17 - line 21; claims 1,7,8,10; figures 1,2,3b *<br>* page 5, line 4 - line 25 * | 3-7,11, 13-15 | |
| | ----- | | |
| A | WO 00/40338 A1 (SHELL INT RESEARCH [NL]; TJEENK WILLINK CORNELIS ANTONI [NL]; BETTING) 13 July 2000 (2000-07-13)<br>* page 1, line 9 - line 18 *<br>* page 3, line 29 - line 34 *<br>* page 5, line 12 - line 22 *<br>* page 9, line 4 - line 25; examples 1-4; table 1 * | 3-6,12, 13,15 | |
| | ----- | | TECHNICAL FIELDS SEARCHED (IPC)<br>C09K<br>F17D<br>C10G |

The present search report has been drawn up for all claims

| Place of search | Date of completion of the search | Examiner |
|---|---|---|
| Munich | 17 January 2007 | Redecker, Michael |

EPO FORM 1503 03.82 (P04C01)

**ANNEX TO THE EUROPEAN SEARCH REPORT
ON EUROPEAN PATENT APPLICATION NO.**

EP 06 07 6610

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2007

| Patent document cited in search report | | Publication date | Patent family member(s) | | Publication date |
|---|---|---|---|---|---|
| WO  0025062 | A | 04-05-2000 | AU | 6373599 A | 15-05-2000 |
| | | | BR | 9914824 A | 10-07-2001 |
| | | | CA | 2346905 A1 | 04-05-2000 |
| | | | DK | 200100657 A | 26-04-2001 |
| | | | EA | 2683 B1 | 29-08-2002 |
| | | | GB | 2358640 A | 01-08-2001 |
| | | | US | 6774276 B1 | 10-08-2004 |
| WO  0040834 | A | 13-07-2000 | AT | 241756 T | 15-06-2003 |
| | | | AU | 755360 B2 | 12-12-2002 |
| | | | AU | 3044600 A | 24-07-2000 |
| | | | BR | 9916719 A | 04-12-2001 |
| | | | CA | 2358071 A1 | 13-07-2000 |
| | | | CN | 1334896 A | 06-02-2002 |
| | | | DE | 69908419 D1 | 03-07-2003 |
| | | | DE | 69908419 T2 | 18-03-2004 |
| | | | DK | 1141519 T3 | 15-09-2003 |
| | | | EA | 4226 B1 | 26-02-2004 |
| | | | EP | 1141519 A1 | 10-10-2001 |
| | | | ID | 29448 A | 30-08-2001 |
| | | | NO | 20013263 A | 17-08-2001 |
| | | | NZ | 512601 A | 30-06-2003 |
| | | | UA | 73729 C2 | 15-10-2001 |
| | | | UA | 73730 C2 | 15-10-2001 |
| | | | US | 6962199 B1 | 08-11-2005 |
| | | | ZA | 200105390 A | 30-09-2002 |
| WO  0040338 | A1 | 13-07-2000 | AT | 248025 T | 15-09-2003 |
| | | | AU | 2104500 A | 24-07-2000 |
| | | | BR | 9916717 A | 04-12-2001 |
| | | | CN | 1334755 A | 06-02-2002 |
| | | | CZ | 20012372 A3 | 13-03-2002 |
| | | | DE | 69910829 D1 | 02-10-2003 |
| | | | DE | 69910829 T2 | 26-02-2004 |
| | | | EP | 1140363 A1 | 10-10-2001 |
| | | | GC | 0000091 A | 30-06-2004 |
| | | | IL | 144004 A | 15-12-2004 |
| | | | JP | 2002534248 T | 15-10-2002 |
| | | | RU | 2229922 C2 | 10-06-2004 |
| | | | TW | 495388 B | 21-07-2002 |
| | | | US | 6513345 B1 | 04-02-2003 |
| | | | ZA | 200105389 A | 01-07-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0025062 A

**Non-patent literature cited in the description**

- **J. CARROL.** *'Natural gas hydrates. A guide for engineers',* 2003
- **A.H. SHAPIRO.** *'The dynamics and thermodynamics of compressible fluid flow',* 1953